# EUROPÄISCHE PATENTSCHRIFT

(11) **EP 2 450 258 B1**
(45) Veröffentlichungstag und Bekanntmachung des Hinweises auf die Patenterteilung: **04.09.2019**
(21) Anmeldenummer: 11008682.4
(22) Anmeldetag: 29.10.2011
(51) Int. Cl.: B62D 5/04

(54) **Kraftfahrzeug mit elektrischer Hilfskraftlenkung**
Motor vehicle with electric power steering
Véhicule automobile doté d'une direction assistée électrique

(30) Priorität: 09.11.2010 DE 102010050818
(43) Veröffentlichungstag der Anmeldung: 09.05.2012
(73) Patentinhaber: Audi AG, 85045 Ingolstadt (DE); Volkswagen Aktiengesellschaft, 38440 Wolfsburg (DE)
(72) Erfinder: Müller, Rolf, 85055 Ingolstadt (DE); Schuller, Jürgen, Dr., 85055 Ingolstadt (DE); Schöttler, Frank, Dr., 38102 Braunschweig (DE)
(74) Vertreter: Patzelt, Heike Anna Maria

(56) Entgegenhaltungen:
- EP-A1- 2 450 259
- EP-A1- 2 614 007
- EP-A1- 2 630 024
- DE-A1- 10 201 705
- US-A1- 2004 080 295

## Beschreibung

Die Erfindung betrifft ein Kraftfahrzeug mit einer elektrischen Hilfskraftlenkung. Ein Kraftfahrzeug weist in an sich bekannter Weise eine Lenkhandhabe zum Lenken zumindest eines Rades auf. Eine Hilfskraftlenkung stellt ein unterstützendes Drehmoment zum Lenken dieses Rades bereit. Bei der elektrischen Hilfskraftlenkung wird das unterstützende Drehmoment von einem Elektromotor aufgebracht.

Die Ansteuerung des Elektromotors erfolgt üblicherweise unter Einsatz elektronischer Komponenten. Elektronische Komponenten können abrupt ausfallen; in diesem Falle entfällt spontan das unterstützende Drehmoment, was für den Fahrzeugführer nicht angenehm ist.

Es ist bekannt, eine in der entsprechenden Vorrichtung zum Ansteuern des Elektromotors beinhaltete Datenverarbeitungseinrichtung in einem Notlaufbetrieb durch eine andere Vorrichtung zu ersetzen. Dadurch werden aber nicht alle empfindlichen Komponenten erfasst.

In der DE 102 01 705 A1 ist eine elektrische Servolenkungsvorrichtung in einem Fahrzeug nach dem Oberbegriff des Anspruchs 1 beschrieben. Die elektrische Servolenkungsvorrichtung umfasst einen Mehrphasenmotor, welcher eine Lenkarbeit eines Fahrers unterstützt. Ferner umfasst die Servolenkungsvorrichtung eine Motortreiberschaltung sowie einen ersten und einen zweiten Mikrocontroller, welche die Motortreiberschaltung steuern.

In der US 2004/080295 A1 ist eine Lenkeinrichtung beschrieben. Die Lenkeinrichtung umfasst mindestens einen Motor zum Erzeugen einer lenkungsunterstützenden Kraft, um ein lenkbares Rad zu lenken, zwei Motorantriebskreise zur PWM-Steuerung des Motors, wobei jeder der Motorantriebskreise ein Schaltelement aufweist. Ferner weist die Lenkeinrichtung eine Steuerung zur Unterscheidung zwischen den Motorantriebskreisen einer Steuerfrequenz auf, bei der das Schaltelement zu- und abgeschaltet wird.

Es ist Aufgabe der Erfindung, die Ausfallsicherheit der Hilfskraftlenkung bei einem Kraftfahrzeug der eingangs genannten Gattung weiter zu erhöhen.

Die Aufgabe wird durch ein Kraftfahrzeug mit den Merkmalen gemäß Patentanspruch 1 gelöst.

Erfindungsgemäß sind somit dem Elektromotor zwei voneinander getrennte Einrichtungen zugeordnet, die jeweils für sich eine Beaufschlagung des Elektromotors mit elektrischem Strom zu bewirken ausgelegt sind. So lässt sich insbesondere im Betrieb des Elektromotors elektrischer Strom aus zwei Komponenten zusammensetzen, von denen jeweils eine von einer der Einrichtungen stammt und die andere von der anderen der Einrichtungen herrührt. Bei dem Ausfall einer der Einrichtungen (insbesondere eines einzigen Bauteils in einer der Einrichtungen) kann dann die andere Einrichtung immer noch eine Beaufschlagung des Elektromotors mit elektrischem Strom bewirken. Selbst, wenn die hierbei entstehende Stromstärke nicht erhöht wird, erhält der Elektromotor wenigstens noch Strom von der halben Stromstärke und kann noch ca. das halbe unterstützende Drehmoment aufbringen, sodass der Ausfall der einen Einrichtung den Fahrzeugführer nicht beeinträchtigt.

Erfindungsgemäß umfasst jede Einrichtung, die eine Beaufschlagung des Elektromotors mit elektrischem Strom bewirken kann, eine Datenverarbeitungseinrichtung, die im Betrieb Steuersignale abgibt. Es besteht somit Redundanz sogar im Bereich von Datenverarbeitungseinrichtungen; selbst wenn eine ganze Datenverarbeitungseinrichtung ausfällt, arbeitet die andere Datenverarbeitungseinrichtung noch weiter, sodass der Elektromotor nach wie vor mit elektrischem Strom beaufschlagt wird.

Die Trennung der beiden Einrichtungen besteht insbesondere im gesonderten Bereitstellen jeweils gleichartiger Bauteile. Man kann aber Synergieeffekte nutzen. So ist es bekannt, für die Datenverarbeitungseinrichtung eine weitere, typischerweise eine geringere Rechenleistung als die Datenverarbeitungseinrichtungen aufweisende Datenverarbeitungseinrichtung als Überwachungseinrichtung vorzusehen, die die Datenverarbeitungseinrichtung überwacht. Vorliegend genügt es, lediglich eine Überwachungseinrichtung vorzusehen, es werden hierbei Kosten, Gewicht und Platz eingespart. Die Überwachungseinrichtung hat zudem die Aufgabe, die Ansteuerung beider Einrichtungen zeitlich zu synchronisieren.

Bevorzugt wird in einem Notlaufbetrieb bei Ausfall einer der Einrichtungen sogar durch die andere Einrichtung Strom höherer Stromstärke abgegeben als zuvor; dann macht sich der Ausfall noch weniger bemerkbar.

Die Datenverarbeitungseinrichtungen sollen ja voneinander unabhängig arbeiten können. So ist bevorzugt hierzu vorgesehen, dass jede Datenverarbeitungseinrichtung der beiden Einrichtungen mit den selben Sensoren gekoppelt ist. Typischerweise gibt es als Sensoren den Lenkmomentensensor, der das an der Lenkhandhabe aufgebrachte Lenkmoment misst, und es gibt einen Rotorlagesensor, der die Drehlage (Winkelstellung) eines Rotors des Elektromotors erfasst, auf die z. B. geregelt wird.

In einer bevorzugten Ausführungsform umfasst jede Einrichtung eine der Datenverarbeitungseinrichtung nachgeordnete Leistungselektronik, die aufgrund von Ausgangssignalen der Datenverarbeitungseinrichtung eine Beaufschlagung des Elektromotors mit Strom zu bewirken ausgelegt ist. Typischerweise wandelt die Leistungselektronik die von der Datenverarbeitungseinrichtung abgegebenen Steuersignale zunächst in Steuersignale für Transistoren in der Leistungselektronik um, und aufgrund dieser Steuersignale kommt es dann zum Fließen von elektrischem Strom über die Wicklungen des Elektromotors.

Nachfolgend wird eine bevorzugte Ausführungsform der Erfindung unter Bezug auf die Zeichnung näher beschrieben, in der
- Fig. 1: eine schematische Darstellung der Anordnung für eine Hilfskraftlenkung in einem erfindungsgemäßen Kraftfahrzeug ist und
- Fig. 2: die bei der Anordnung aus Fig. 1 gegebene Verschaltung veranschaulicht.

In einem im Ganzen in den Figuren nicht gezeigten Kraftfahrzeug soll ein Elektromotor M, der vorliegend als Drei-Phasen-Motor ausgebildet ist, ein unterstützendes Drehmoment zum Lenken zumindest eines in der Figur nicht gezeigten Rades bereitstellen, das zu dem an einer Lenkhandhabe aufgebrachten Lenkmoment hinzutritt. Die Beaufschlagung des Elektromotors M mit elektrischem Strom erfolgt in Abhängigkeit von Sensorsignalen, die durch Sensoren S1 und S2 gemessen werden. Der Sensor S1 misst hierbei das an der Lenkhandhabe aufgebrachte Lenkmoment (Drehmoment), der Sensor S2 die Winkelstellung eines in der Figur nicht gezeigten Rotors des Elektromotors. Die mit 10 bezeichnete Einheit kann als (Steuer-)Gerät ausgebildet sein, oder lediglich in Form einer Schaltungsanordnung bereitgestellt sein.

In an sich bekannter Weise werden die Sensorsignale der Sensoren S1 und S2 von einer Datenverarbeitungseinrichtung 12a verarbeitet, die Steuersignale an eine sog. Gate Drive Unit, GDU 14a abgibt, die die Aufgabe des Wandelns der Steuersignale in Steuersignale für Transistoren 16a hat. Durch geeignete Schaltung der Transistoren fließt dann ein entsprechender Strom über die Wicklungen des Elektromotors M.

Die Datenverarbeitungseinrichtung 12a, die Einrichtung 14a zum Wandeln und die Transistoren 16a können gemeinsam als eine Einheit 18a betrachtet werden. Eine gleichartige Einheit 18b ist nun in dem erfindungsgemäßen Kraftfahrzeug ebenfalls bereitgestellt, mit Datenverarbeitungseinrichtung 12b, Einrichtung zum Wandeln 14b und Transistoren 16b. Die Datenverarbeitungseinrichtungen 12a und 12b werden hierbei von einem gemeinsamen Überwachungsrechner 20 überwacht sowie zeitlich synchronisiert, der vorliegend die Einrichtungen zum Wandeln 14a und 14b jeweils abschalten kann. Die Einheiten 18a und 18b arbeiten unabhängig voneinander.

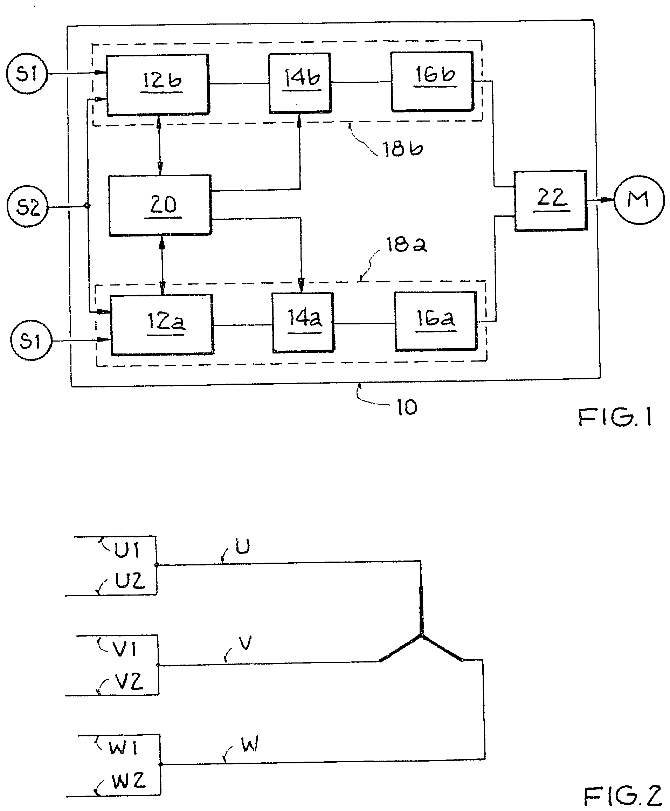

Durch die Bezugszahl 22 ist nun in Fig. 1 symbolisiert, dass die Einheiten 18a und 18b schaltungstechnisch zusammengeführt sind. Dies wird dann im Detail anhand von Fig. 2 dargestellt.

Die Transistoren 16a sollen vorliegend das Fließen von Strom in den entsprechenden Phasen über die Leitungen U1, V1 und W1 bewirken. Die Transistoren 16b sollen wiederum das Fließen von Strom in den entsprechenden Phasen über die Leitungen U2, V2 und W2 bewirken. Nun sind diese Leitungen paarweise zusammengeführt, nämlich U1 und U2 zur Leitung U, V1 und V2 zur Leitung V und W1 und W2 zur Leitung W. Der Strom, der in den Leitungen U, V und W fließt, kann nun entweder aus der ersten Einheit 18a oder der zweiten Einheit 18b stammen. Im Zweifel addieren sich jeweilige Komponenten auf. Der Elektromotor M wird daher gleichzeitig durch beide Einheiten 18a und 18b betrieben.

Dies hat den Vorteil, dass bei Ausfall einer der beiden Einheiten 18a und 18b die andere Einheit 18b, 18a weiterarbeiten kann, sodass der Elektromotor nach wie vor mit Strom beaufschlagt ist. Gegebenenfalls kann die Überwachungseinrichtung 20 sogar durch Übermittlung entsprechender Signale an die jeweiligen Datenverarbeitungseinrichtungen 12a, 12b bewirken, dass die Stromstärke des von der jeweiligen Einheit 18a, 18b zu fließen bewirkten Stroms erhöht wird, wenn die jeweils andere Einheit 18b, 18a ausgefallen ist.

Anders als in den Figuren dargestellt, werden wie an sich bekannt und üblich die Sensoren S1, S2 jeweils zweifach bereitgestellt, um auch im Bereich der Sensorik für eine Redundanz zu sorgen, damit eine erhöhte Ausfallsicherheit gegeben ist.

## Patentansprüche

1. Kraftfahrzeug mit einer Lenkhandhabe zum Lenken zumindest eines Rades und mit einem Elektromotor (M) zum Bereitstellen eines unterstützenden Drehmoments zum Lenken des zumindest einen Rades, wobei dem Elektromotor (M) zwei voneinander getrennte Einheiten (18a, 18b) zugeordnet sind, die jeweils für sich eine Beaufschlagung des Elektromotors (M) mit elektrischem Strom zu bewirken ausgelegt sind, wobei jede Einheit (18a, 18b) eine Datenverarbeitungseinrichtung (12a, 12b) umfasst, die im Betrieb Steuersignale abgibt,
**dadurch gekennzeichnet, dass**
den voneinander getrennten Datenverarbeitungseinrichtungen (12a, 12b) gemeinsam eine Überwachungseinrichtung (20) zu ihrer Überwachung zugeordnet ist.

2. Kraftfahrzeug nach Anspruch 1, **dadurch gekennzeichnet, dass** jede Datenverarbeitungseinrichtung (12a, 12b) der Einheiten (18a, 18b) mit denselben Sensoren (S1, S2) gekoppelt ist.

3. Kraftfahrzeug nach Anspruch 1 oder 2,
**dadurch gekennzeichnet, dass**
jede Einheit (18a, 18b) eine der Datenverarbeitungseinrichtung (12a, 12b) nachgeordnete Leistungselektronik (14a, 16a; 14b, 16b) umfasst, die aufgrund von Ausgangssignalen der Datenverarbeitungseinrichtung (12a, 12b) eine Beaufschlagung des Elektromotors (M) mit Strom zu bewirken ausgelegt ist.

## Claims

1. Motor vehicle having a steering wheel for steering at least one wheel and having an electric motor (M) for providing a supported torque for steering the at least one wheel, wherein two units (18a, 18b) separate from one another are assigned to the electric motor (M), which units are designed separately to supply the electric motor (M) with electric current, wherein each unit (18a, 18b) comprises a data processing device (12a, 12b) which during operation emits control signals,
**characterised in that**
a shared monitoring device (20) is assigned to the data processing devices (12a, 12b) which are separate from one another in order to monitor them.

2. Motor vehicle according to claim 1, **characterised in that** each data processing device (12a, 12b) of the units (18a, 18b) is coupled with the same sensors (S1, S2).

3. Motor vehicle according to claim 1 or 2,
**characterised in that**
each unit (18a, 18b) comprises a power electronic unit (14a, 16a; 14b, 16b) connected downstream from the data processing device (12a, 12b), which power electric unit is designed to supply the electric motor (M) with current on the basis of output signals from the data processing device (12a, 12b).

## Revendications

1. Véhicule automobile avec un manche de direction pour la direction d'au moins une roue et avec un moteur électrique (M) pour la mise à disposition d'un couple d'assistance pour la direction de l'au moins une roue, dans lequel deux unités (18a, 18b) séparées l'une de l'autre sont associées au moteur électrique (M), lesquelles sont conçues pour provoquer respectivement pour soi une alimentation du moteur électrique (M) en courant électrique, dans lequel chaque unité (18a, 18b) comprend un dispositif de traitement de données (12a, 12b) qui émet en fonctionnement des signaux de commande,
**caractérisé en ce que**
un dispositif de surveillance (20) est associé pour leur surveillance aux dispositifs de traitement de données (12a, 12b) séparés les uns des autres ensemble.

2. Véhicule automobile selon la revendication 1, **caractérisé en ce que** chaque dispositif de traitement de données (12a, 12b) des unités (18a, 18b) est couplé aux mêmes capteurs (S1, S2).

3. Véhicule automobile selon la revendication 1 ou 2,
**caractérisé en ce que**
chaque unité (18a, 18b) comprend une électronique de puissance (14a, 16a ; 14b, 16b) agencée en aval du dispositif de traitement de données (12a, 12b) qui est conçue afin de provoquer une alimentation du moteur électrique (M) en courant en raison de signaux de sortie du dispositif de traitement de données (12a, 12b).
